# FASCICULE DE BREVET EUROPEEN

(11) **EP 2 636 041 B1**
(45) Date de publication et mention de la délivrance du brevet: **21.05.2014**
(21) Numéro de dépôt: 11799742.9
(22) Date de dépôt: 31.10.2011
(51) Int. Cl.: G21C 1/09, G21C 13/02, G21D 1/02, G21C 19/28, G21C 19/16

(54) **PROCEDE DE REMPLISSAGE EN EAU D'UN CIRCUIT PRIMAIRE D'UN REACTEUR NUCLEAIRE**
VERFAHREN ZUM FÜLLEN VON WASSER IN EINEN PRIMÄRKÜHLKREISLAUF EINES KERNREAKTORS
METHOD FOR FILLING WATER INTO A PRIMARY COOLING CIRCUIT OF A NUCLEAR REACTOR

(30) Priorité: 04.11.2010 FR 1059107
(43) Date de publication de la demande: 11.09.2013
(73) Titulaire: Electricité de France, 75008 Paris (FR)
(72) Inventeur: LEGENDRE, Christophe, F-50690 Virandeville (FR)
(74) Mandataire: Cabinet Plasseraud
(86) Numéro de dépôt international: PCT/FR2011/052551
(87) Numéro de publication internationale: WO 2012/059682

(56) Documents cités:
- WO-A1-96/01476
- FR-A1- 2 861 493
- FR-A1- 2 921 510

## Description

La présente invention se rapporte à un procédé de remplissage en eau et de vidange de l'air d'un circuit primaire d'un réacteur nucléaire refroidi par de l'eau, suite à un arrêt du réacteur, ledit circuit primaire comprenant une cuve adaptée pour être remplie d'eau et recevoir du combustible nucléaire. Le circuit primaire comprend en outre au moins une boucle de refroidissement adaptée pour aspirer de l'eau de la cuve, céder de la chaleur à un générateur de vapeur et ramener l'eau refroidie jusqu'à la cuve, chaque générateur de vapeur étant relié d'une part à une première ouverture latérale de la cuve par un premier circuit fluidique de départ d'eau et d'autre part à une seconde ouverture latérale de la cuve par un second circuit fluidique de retour d'eau, une paire de dites première et seconde ouvertures latérales étant associée à chaque boucle de refroidissement.

Un premier circuit fluidique d'une boucle de refroidissement est communément appelé « branche chaude » puisqu'il transporte l'eau de la cuve aspirée vers le générateur de vapeur, et un second circuit fluidique est communément appelé « branche froide » puisqu'il fait retourner dans la cuve l'eau refroidie par le générateur de vapeur. De manière courante, les tubes d'un générateur de vapeur ont une forme de U inversé et sont communément appelés les « épingles ». Ces tubes sont immergées dans de l'eau d'un circuit secondaire fermé qui circule dans le générateur de vapeur, afin de porter cette eau à ébullition pour alimenter en vapeur une turbine entraînant un alternateur. De par leur conception, les générateurs de vapeur comprennent typiquement plusieurs centaines d'épingles formées chacune par un tube d'environ un centimètre de diamètre. Les tubes sont généralement situés au dessus du niveau de la cuve et constituent des points hauts qui ne peuvent pas être éventés. Cette partie du circuit primaire nécessite donc une procédure particulière pour assurer son remplissage.

Chacune des tranches d'une centrale nucléaire doit être périodiquement arrêtée pour des opérations de maintenance et de renouvellement du combustible nucléaire. Il faut éviter pendant le remplissage que des bouchons d'air trop volumineux restent piégés au niveau des générateurs de vapeur. En effet, au redémarrage du réacteur, bien que le volume des bouchons d'air diminue fortement du fait de la mise sous pression du circuit primaire pour maintenir l'eau à l'état liquide en l'empêchant de bouillir, ces bouchons circulent avec l'eau dans le circuit et des bouchons trop volumineux risquent d'endommager les pompes primaires à cause du phénomène de cavitation causé par un passage d'air trop important dans une pompe. Par conséquent, et également pour des raisons de chimie, il est nécessaire d'éliminer la quasi-totalité de l'air contenu dans le circuit primaire avant le démarrage de la tranche.

Afin de remplir en eau le circuit primaire de façon à ce que le volume d'air piégé reste inférieur à un seuil imposé par les autorités de sûreté en fonction du type d'installation, il existe plusieurs procédés de remplissage en eau et de vidange d'air du circuit primaire d'une tranche nucléaire suite à son arrêt pour le renouvellement du combustible. Un premier procédé communément appelé "éventage dynamique" consiste simplement à remplir en eau les tubes en épingles au moment du démarrage des pompes du circuit primaire. L'air ainsi chassé des épingles s'accumule dans les points hauts du circuit primaire, comme le couvercle de la cuve, qui sont alors éventés. Cette opération est répétée plusieurs fois puis un bilan d'air est réalisé. Ce mode de remplissage et d'éventage nécessite de nombreuses pressurisations et dépressurisations du circuit primaire, ce qui sur le long terme peut être préjudiciable à la bonne tenue mécanique de la cuve, et nécessite aussi un nombre important de démarrages et d'arrêt des pompes primaires. Un tel procédé est connu du document FR 2 861 493 A1.

Afin de prolonger la durée de vie des centrales, une autre méthode de remplissage est employée dans laquelle le remplissage est effectué suite à la mise sous vide du circuit primaire, le combustible nucléaire étant en place dans la cuve. Cette méthode présente toutefois des inconvénients. En particulier, durant la phase de mise en dépression et la phase de remplissage, le vide doit être maintenu dans le circuit primaire. Si une entrée d'air apparait ou s'il survient une défaillance de l'installation de mise sous vide, les opérations sont à reprendre. De plus, les préparatifs de mise sous vide sont relativement longs, typiquement une centaine d'heures, dont quelques heures sur le chemin critique du planning d'arrêt de la tranche nucléaire. Un tel procédé est connu du document FR 2 921 510 A1.

La présente invention vise à remédier aux inconvénients susmentionnés et en particulier vise à réaliser un procédé de remplissage en eau et de vidange d'air d'un circuit primaire d'un réacteur nucléaire en vue de son redémarrage qui soit moins coûteux en temps de gestion et qui diminue la durée de l'arrêt de l'installation tout en respectant les règles de sûreté nucléaire.

A cet effet, l'invention a pour objet un procédé tel que défini en partie introductive ci-dessus, caractérisé en ce qu'il comprend les étapes de :
a) ajustement du niveau de l'eau dans la cuve à un premier niveau pour lequel chaque boucle de refroidissement est mise à l'air par au moins l'une desdites première et seconde ouvertures latérales associées ;
b) mise en place dans la cuve d'un dispositif de raccordement et d'isolement fluidique adapté pour être raccordé à l'un desdits premier et second circuits fluidiques de chaque boucle de refroidissement afin d'isoler substantiellement ledit circuit fluidique par rapport à l'intérieur de la cuve ;
c) injection d'eau dans au moins une boucle de refroidissement dans celui des premier et second circuits fluidiques de ladite boucle de refroidissement auquel est raccordé le dispositif de raccordement et d'isolement fluidique, avec un débit d'eau prévu de façon à remplir en eau ladite boucle de refroidissement en chassant l'air du générateur de vapeur ;
d) arrêt de ladite injection d'eau quand l'eau s'écoulant dans la cuve depuis chaque boucle de refroidissement a fait monter le niveau de l'eau à un second niveau pour lequel toutes lesdites première et seconde ouvertures latérales de la cuve soient complètement immergées ; et
e) retrait du dispositif de raccordement fluidique.

Grâce à ces dispositions, le remplissage en eau ne nécessite pas de cycle de mise en pression et de dépressurisation subséquente du circuit primaire, ce qui augmente la durée de vie de la cuve. De plus, il n'est pas utile de mettre en service les pompes du circuit primaire, ce qui allège la maintenance de ces pompes. Parmi d'autres avantages, on notera que le procédé n'oblige généralement pas à modifier les éléments existants de l'installation, seul l'apport d'un dispositif de raccordement et d'isolement fluidique étant nécessaire pour la mise en oeuvre dans une installation classique. Par ailleurs, le procédé permet une durée de mise en oeuvre nettement inférieure à la durée nécessaire pour les méthodes connues évoquées dans ce qui précède. Cette durée pourra par exemple être ramenée à environ 12 heures de préparation non critique auxquelles s'ajoutent 2 à 3 heures de mise en place.

Dans des modes de réalisation préférés d'un procédé selon l'invention, on a recours notamment à l'une ou l'autre des dispositions suivantes :
le circuit primaire comprenant une pluralité de N boucles de refroidissement reliées à la cuve, le dispositif de raccordement et d'isolement fluidique mis en place à l'étape b) est adapté pour se raccorder à un groupe de N ouvertures latérales de la cuve parmi un premier groupe de N dites premières ouvertures latérales et un second groupe de N dites secondes ouvertures latérales ; ce qui permet d'avoir à mettre en place un seul dispositif de raccordement et d'isolement fluidique pour le raccordement à l'ensemble des premiers circuits fluidiques (branches chaudes) ou à l'ensemble des seconds circuits fluidiques (branches froides) ;
le dispositif de raccordement et d'isolement fluidique est adapté pour permettre qu'à l'étape c) l'eau injectée dans ledit circuit fluidique s'écoule vers au moins un autre circuit fluidique de même nature en passant par l'intérieur dudit dispositif de raccordement et d'isolement fluidique ; ce qui permet d'injecter de l'eau dans une seule boucle de refroidissement au niveau d'une branche chaude ou d'une branche froide et d'obtenir un remplissage d'au moins une autre branche de même nature chaude ou froide raccordée au dispositif, grâce au passage de l'eau de la branche d'injection vers ladite au moins une autre branche par l'intermédiaire du dispositif de raccordement et d'isolement fluidique ;
l'injection d'eau à l'étape c) est effectuée par un circuit d'injection de sécurité raccordé audit circuit fluidique et apte à injecter de l'eau en cas d'accident de perte d'eau dans le circuit primaire quand le réacteur nucléaire est en fonctionnement ; ce qui permet d'utiliser un circuit d'injection déjà présent sur l'installation et comprenant généralement un réservoir d'eau et un système de pompes d'injection, évitant ainsi des modifications coûteuses ;
à l'étape b) le dispositif de raccordement et d'isolement fluidique est raccordé à chaque dite première ouverture latérale de la cuve ; ce qui isole substantiellement chaque premier circuit fluidique de par rapport à l'intérieur de la cuve ;
à l'étape c) l'injection d'eau dans les N boucles de refroidissement s'effectue à partir d'un unique circuit d'injection ;
on utilise un dispositif de raccordement et d'isolement fluidique adapté pour boucher substantiellement au moins une ouverture latérale associée à un circuit fluidique auquel le dispositif se raccorde ;
le procédé de remplissage en eau étant appliqué à un circuit primaire dans lequel un dit générateur de vapeur comprend une pluralité de tubes de transport d'eau qui comprennent chacun deux parties de tube verticales reliées entre elles en formant une épingle, on effectue l'injection d'eau à l'étape c) avec un débit supérieur ou égal à un débit prédéterminé suffisant pour que dans tous les tubes de chaque générateur de vapeur l'eau remonte dans une première des deux parties de tube verticales et redescend dans la seconde partie de tube verticale en chassant l'air du tube.

D'autres caractéristiques et avantages ressortent de la description qui va suivre d'exemples non limitatifs de modes de réalisation, en référence aux figures dans lesquelles :
La figure 1 représente schématiquement une vue partielle en coupe verticale d'un réacteur nucléaire dans lequel a été mis en place un dispositif de raccordement et d'isolement fluidique adapté pour la mise en oeuvre du procédé de remplissage en eau et de vidange d'air selon l'invention.
La figure 2 représente schématiquement la vue partielle en coupe du réacteur nucléaire de la figure 1 dans lequel le dispositif de raccordement et d'isolement fluidique a été abaissé et raccordé aux branches chaudes du circuit primaire.
La figure 3 représente schématiquement un agrandissement du dispositif de raccordement et d'isolement fluidique dans la même situation de raccordement qu' à la figure 2 et à une étape ultérieure du procédé de remplissage en eau et de vidange d'air selon l'invention dans laquelle de l'eau est injectée dans les branches chaudes en utilisant un circuit d'injection de sécurité existant.
La figure 4 représente schématiquement une vue partielle de dessus en coupe horizontale d'un réacteur nucléaire à quatre boucles de refroidissement dans lequel un dispositif de raccordement et d'isolement fluidique raccorde entre eux les branches chaudes du circuit primaire, et à une étape du procédé selon l'invention dans laquelle de l'eau est injectée en utilisant un des circuits d'injection de sécurité de l'installation.
La figure 5 représente un schéma de principe du remplissage des tubes des générateurs de vapeur lors de la mise en oeuvre du procédé de remplissage en eau et de vidange d'air selon l'invention, pour illustrer les paramètres à prendre en compte dans la détermination d'un débit suffisant à atteindre.
La figure 6 représente schématiquement une vue partielle de dessus en coupe horizontale d'un dispositif de raccordement et d'isolement fluidique équipé d'un mécanisme d'actionnement commun pour actionner ensemble des éléments télescopiques de raccordement.

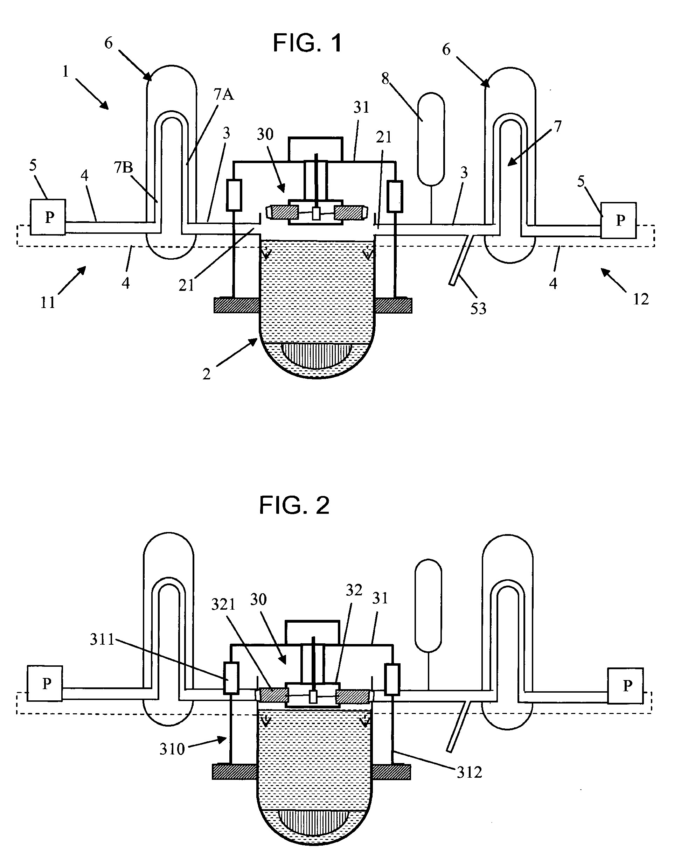

Sur la FIG.1, on a représenté schématiquement une cuve 2 d'un réacteur nucléaire, vue en coupe selon un plan passant par l'axe vertical de la cuve, et deux boucles de refroidissement 11 et 12 du circuit primaire raccordées à la cuve par des ouvertures latérales de celle-ci. Chaque boucle de refroidissement comprend un générateur de vapeur 6 relié d'une part à une première ouverture latérale 21 de la cuve par un premier circuit fluidique 3 de départ d'eau communément appelé « branche chaude » et d'autre part à une seconde ouverture latérale 22 de la cuve par un second circuit fluidique 4 de retour d'eau communément appelé « branche froide ». Chaque branche froide comprend un système de pompage 5 adapté pour faire circuler l'eau dans la boucle de refroidissement de la branche chaude vers la branche froide.

Une des boucles de refroidissement est équipée d'un pressuriseur 8 adapté pour mettre l'eau sous pression dans l'ensemble du circuit primaire en fonctionnement, par exemple à une pression de l'ordre de 150 bars. Quand le réacteur est en fonctionnement, la cuve est fermée par un couvercle traversé de façon étanche par des barres mobiles appelées grappes de contrôle. L'eau est donc maintenue sous pression dans un circuit primaire étanche.

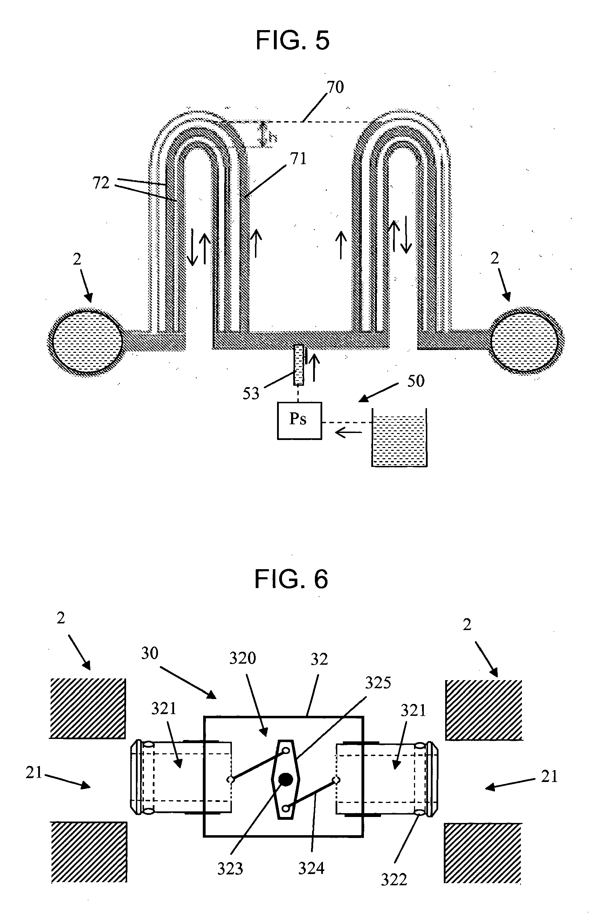

Les générateurs de vapeur 6 ont pour rôle de transférer la chaleur du circuit primaire au circuit secondaire (non représenté sur la figure). Ils peuvent avoir chacun par exemple 20 mètres de hauteur, 4 mètres de diamètre, et une masse de 350 tonnes. Afin d'avoir une très grande surface d'échange thermique, l'eau du circuit primaire circule dans un faisceau de centaines voire de milliers de tubes fins 7 immergés au sein du fluide secondaire circulant dans l'enceinte du générateur de vapeur. Le diamètre intérieur d'un tube 7 est typiquement de l'ordre de 1 cm. Chaque tube 7 comprend deux parties de tube verticales 7A et 7B reliées entre elles en formant une épingle, et un faisceau de tubes comprend des séries de tubes en U inversé de différentes hauteurs afin d'optimiser la surface d'échange thermique de l'ensemble, comme schématisé sur la FIG.5.

Suite à un arrêt du réacteur pour maintenance et en particulier pour le renouvellement du combustible, le couvercle de la cuve et le mécanisme de grappes de contrôle, qui peuvent peser plus de cent tonnes, sont retirés de la cuve et déposés. La mise en ouvre du procédé de remplissage en eau et de vidange d'air objet de l'invention intervient une fois que le couvercle a été déposé et le combustible a été retiré de la cuve.

Le procédé selon l'invention utilise un dispositif de raccordement et d'isolement fluidique dont la fonction principale consiste à isoler substantiellement de l'intérieur de la cuve l'ensemble des branches de même nature, c'est-à-dire l'ensemble des branches chaudes ou l'ensemble des branches froides. On entend par isolation substantielle une isolation pouvant être complète de façon à empêcher complètement un circuit fluidique, par exemple une branche chaude, de communiquer avec l'intérieur de la cuve, mais aussi une isolation pouvant être incomplète de façon à créer à l'extrémité du circuit fluidique au niveau d'une ouverture latérale de la cuve un passage de purge d'air tel qu'un orifice. Un exemple d'isolation incomplète est décrit plus loin en rapport avec un mode de réalisation dans lequel le dispositif de raccordement et d'isolement fluidique utilise des éléments télescopiques de bouchage sur lesquels sont prévus de tels passages de purge d'air.

Dans ce qui suit, on décrira en premier lieu un mode de réalisation dans lequel le dispositif 30 est utilisé pour isoler complètement l'ensemble des branches chaudes 3 par rapport à l'intérieur de la cuve. Le choix des branches chaudes s'explique notamment du fait que les arrivées des branches froides dans la cuve ne sont généralement pas accessibles sur la plupart des réacteurs à eau pressurisée. En effet, ces arrivées peuvent être cachées de l'intérieur de la cuve par une enveloppe de coeur montée dans la cuve et qui dévie vers le fond de la cuve l'eau arrivant. De plus, il peut être préférable pour le système de pompage 5 que le remplissage du générateur de vapeur 6 dans chaque boucle de refroidissement 11 à 14 s'effectue dans le même sens d'écoulement fluidique que celui du pompage en fonctionnement.

Par ailleurs, on se référera à un circuit primaire comportant plusieurs boucles de refroidissement, mais le procédé peut aussi être mis en oeuvre dans une installation comportant une seule boucle de refroidissement, auquel cas le dispositif de raccordement et d'isolement fluidique est adapté pour obturer l'ouverture latérale de la cuve associée à l'unique branche chaude ou l'unique branche froide.

Lors du remplissage en eau, afin d'éventer efficacement hors d'une boucle de refroidissement l'air chassé des tubes en épingles 7 du générateur de vapeur 6 de la boucle, il est préférable que la branche par laquelle l'air est chassé soit mise à l'air de façon à ce que l'air chassé ne soit pas gêné par une portion de branche remplie d'eau. Par conséquent, le procédé objet de l'invention comprend une première étape d'ajustement du niveau de l'eau dans la cuve à un premier niveau prévu de façon à ce que pour chaque boucle de refroidissement, au moins l'ouverture latérale associée à la branche par laquelle l'air est chassé soit mise à l'air. Les ouvertures latérales de la cuve étant généralement prévues à une même hauteur dans la plupart des installations, elles seront toutes à l'air une fois que le niveau de l'eau dans la cuve est ajusté. Le premier niveau susmentionné n'est pas nécessairement prédéterminé de façon précise, des variations pouvant être tolérées d'une opération de remplissage à une autre dès lors que les ouvertures latérales de la cuve sont à l'air.

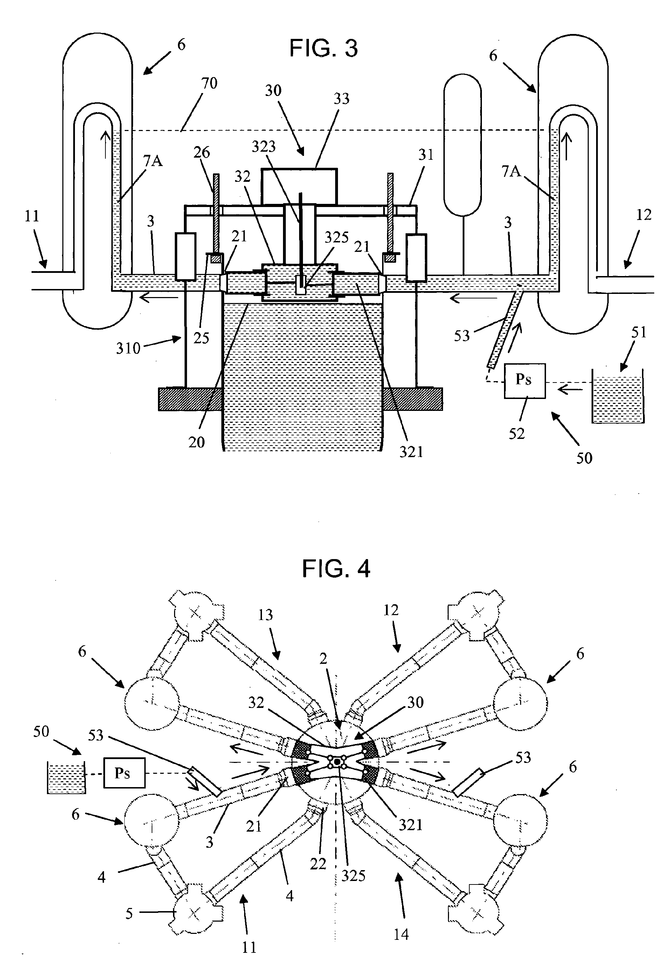

Dans un mode de réalisation du procédé de remplissage mis en oeuvre dans le réacteur représenté schématiquement sur les figures 1 à 4, le niveau de l'eau 20 dans la cuve est amené à un premier niveau prévu de façon à mettre à l'air les ouvertures 22 associées aux branches froides 4 (FIG.3, FIG.4), ces ouvertures 22 étant ici à la même hauteur que les ouvertures 21 associées aux branches chaudes 3.

Sur la FIG.1, le dispositif de raccordement et d'isolement fluidique 30 est positionné par rapport à la cuve avec une position angulaire précisément prédéfinie autour de l'axe vertical de la cuve et une position altimétrique qui n'est pas encore ajustée. Pour le positionnement angulaire du dispositif 30, puisque le couvercle de la cuve est retiré, on peut avantageusement utiliser des colonnes de guidage 26 qui sont montées sur la cuve et font saillie à partir du plan de joint 25 de la cuve (FIG.3). Ces colonnes 26 servent au guidage du couvercle pour sa mise en place sur le plan de joint 25. Par construction, les positions angulaires des axes des ouvertures 21 et 22 de la cuve relativement aux axes des colonnes 26 sont connues avec précision. Le dispositif 30 peut avantageusement être muni d'un système de positionnement et de guidage 31 comprenant des orifices de positionnement en correspondance avec les colonnes 26.

Dans le présent mode de réalisation, le système de positionnement et de guidage 31 comprend au moins deux jambes télescopiques 310 adaptées pour être positionné de manière fixe par rapport à la cuve 2, et supporte un boitier central 32 (FIG.2). Des éléments télescopiques de raccordement 321 en même nombre N que le nombre de boucles de refroidissement du circuit primaire sont montés sur le boitier central 32. Chaque jambe télescopique 310 est équipée d'un pied 312 adapté pour être posé sur une bride support 27 solidaire de la cuve ou sur un emplacement de la piscine du bâtiment abritant la cuve, et d'un vérin 311 de façon à pouvoir varier la position altimétrique du système de positionnement et de guidage 31 selon une direction sensiblement verticale. Ceci permet de déplacer verticalement le boitier central 32 pour le descendre dans la cuve jusqu'à une position prête au raccordement sensiblement à un même niveau que les ouvertures latérales 21 de la cuve associées aux branches chaudes.

Le positionnement altimétrique du système 31 est géré par exemple à l'aide d'un ensemble de capteurs prenant en référence le plan de joint 25 de la cuve de façon à positionner précisément chaque élément télescopique de raccordement 321 à une distance verticale prédéterminée par rapport au plan de joint, laquelle distance est prévue pour que l'élément télescopique se trouve précisément dans l'alignement axial de l'ouverture latérale de la cuve à laquelle il doit être raccordé. Le plan de joint d'une cuve de réacteur est généralement d'une planéité quasi parfaite et est positionné précisément à l'horizontale. Les écarts de planéité tolérés sont par exemple d'environ cinq dixièmes de millimètres pour un diamètre de cuve de quatre mètres. Le plan de joint constitue donc une référence fiable pour le positionnement altimétrique de l'ensemble des éléments télescopiques 321.

Dans la position prête au raccordement, les N éléments télescopiques de raccordement 321 se trouvent chacun en face d'une ouverture latérale correspondante 21 de la cuve et sont chacun aptes à être déployés pour se raccorder à une ouverture 21.

Le dispositif de raccordement et d'isolement fluidique 30 comprend avantageusement un mécanisme d'actionnement commun 320 disposé à l'intérieur du boitier central 32 et adapté pour actionner ensemble les N éléments télescopiques de raccordement 321 (FIG.6). Dans le mode de réalisation représenté sur la FIG.6, le mécanisme 320 comprend un moyeu 325 commandé en rotation et relié aux deux éléments télescopiques 321 par des bielles 324, chaque bielle étant articulée sur le moyeu 325 et sur un organe mobile en translation d'un élément télescopique. Dans le mode de réalisation représenté succinctement sur la FIG.4, le mécanisme comprend aussi un moyeu 325 commandé en rotation et relié aux quatre éléments télescopiques 321 par quatre bielles articulées. Avantageusement, le moyeu 325 peut être rendu solidaire en rotation d'une tige de commande 323 traversant de façon étanche le boitier central 32 (FIG.3). Cette tige de commande 323 est actionnée en rotation par un organe de commande 33 tel qu'un moteur électrique supporté par le système de positionnement et de guidage 31.

Encore avantageusement, on peut prévoir des joints annulaires gonflables 322 sur les éléments télescopiques 321 afin d'assurer un raccordement étanche entre chaque élément 321 et une ouverture latérale 21 de la cuve. L'organe mobile en translation d'un élément télescopique est alors prévu ayant un diamètre extérieur inférieur à un diamètre intérieur d'une ouverture latérale 21. Tant que le dispositif de raccordement 30 reste dans une position de retrait telle que représentée sur la FIG.6, les joints gonflables 322 sont maintenus dégonflés. Lorsque le dispositif de raccordement 30 est déployé, une partie frontale de chaque élément télescopique 321 est insérée dans une ouverture latérale 21 en laissant un certain espace radial. Les joints gonflables 322 peuvent alors être gonflés pour réaliser l'étanchéité.

L'état raccordé du dispositif de raccordement et d'isolement fluidique 30 est représenté sur les figures 2, 3 et 4. Dans le mode de réalisation représenté, chaque élément télescopique de raccordement 321 comprend un canal intérieur permettant un passage de fluide entre l'ouverture latérale 21 correspondante et un espace intérieur du boitier central 32 du dispositif 30. De cette façon, de l'eau peut circuler par l'intermédiaire du dispositif 30 entre les branches raccordées au dispositif, ici les branches chaudes 3.

L'ensemble des branches chaudes étant isolé de l'intérieur de la cuve grâce au dispositif 30, le remplissage en eau du circuit primaire peut être effectué par une injection d'eau dans les branches chaudes jusqu'à remplir complètement les boucles de refroidissement. L'injection d'eau est réalisée par exemple à partir d'un circuit d'injection 50 raccordé à une seule branche chaude, puisque l'eau va remplir progressivement toutes les branches chaudes en passant par le boitier central 32 et les éléments télescopiques 321. Dans une installation à quatre boucles de refroidissement(FIG.4), l'assemblage formé par le boitier 32 et les éléments 321 présente la forme d'un X, et peut pour cette raison être appelé « croix de remplissage ».

Le circuit d'injection 50 peut avantageusement utiliser un circuit d'injection de sécurité communément appelé RIS, adapté pour injecter de l'eau en cas d'accident de perte d'eau dans le circuit primaire quand le réacteur nucléaire est en fonctionnement. La plupart des installations existantes comprennent au moins un tel circuit d'injection de sécurité, lequel comprend généralement un réservoir d'eau situé à l'extérieur ou à l'intérieur de l'enceinte du réacteur et des pompes d'injection de sécurité à basse pression et à haute pression.

Pour l'étape d'injection d'eau du procédé, on utilisera avantageusement des pompes d'injection de sécurité à basse pression comme système de pompage 52 pour injecter dans une branche chaude 3 l'eau provenant d'un réservoir de sécurité 51, par l'intermédiaire d'une entrée d'injection 53 prévue sur la branche chaude et raccordée en permanence au système de pompage 52 (FIG.3). En effet, pour forcer l'eau à monter dans les épingles des générateurs de vapeur, il faut que les pompes permettent d'atteindre un certain débit comme expliqué plus loin. Il est entendu que le circuit primaire est sensiblement à la pression atmosphérique, puisque les branches froides 4 sont mises à l'air au niveau de la cuve.

Le circuit d'injection 50 n'est pas nécessairement un circuit d'injection de sécurité. Il est possible, en alternative ou de façon additionnelle à un système RIS, d'utiliser un système de contrôle volumétrique et chimique communément appelé RCV et qui a notamment pour fonction de maintenir dans le circuit primaire la quantité d'eau nécessaire au refroidissement du coeur. Un système RCV comprend typiquement un circuit d'injection aussi appelé circuit de charge et un circuit de vidange aussi appelé circuit de décharge, pour la régulation du volume d'eau du circuit primaire. Il est possible d'utiliser le circuit de charge et son système de pompage comme circuit d'injection 50.

Par ailleurs, le circuit primaire peut être équipé de plusieurs entrées d'injection d'eau 53 reliées à des pompes d'injection, et on pourra en fonction de la configuration de l'installation utiliser plus d'une entrée d'injection si cela est préférable afin d'obtenir un débit d'injection suffisant.

En référence à la FIG.3 et la FIG.4, l'eau injectée dans une branche chaude 3 passe dans les autres branches chaudes par l'intermédiaire de la croix de remplissage. Le niveau d'eau 70 monte ensuite dans les parties de tube verticales 7A des tubes 7 des générateurs de vapeur jusqu'à atteindre le sommet des épingles les plus hautes, puis l'eau redescend dans les parties de tube verticales 7B jusqu'aux branches froides 4 pour aller s'écouler dans la cuve 2. L'air présent dans les épingles 7 est chassé vers les branches froides pour sortir au niveau de la cuve par les ouvertures latérales 22.

En référence à la FIG.5, on comprend que le remplissage de toutes les épingles des générateurs de vapeur implique de respecter certaines conditions de débit d'eau. En effet, dans un faisceau de tubes en U inversé de différentes hauteurs, les tubes les plus élevés 71 risquent de ne pas se remplir complètement si le débit en entrée dans la branche chaude n'est pas suffisant. Dans ce cas, l'eau circulera seulement par une série d'autres tubes 72 qui sont moins élevés, et le niveau 70 de l'eau dans les tubes les plus élevés 71 restera à une hauteur relative h insuffisante pour passer les sommets des épingles.

En augmentant le débit d'injection, on augmente le débit effectif et donc les pertes de charge dans les tubes moins élevés 72, ce qui favorise la montée progressive de l'eau dans les tubes les plus élevés 71. A partir d'un certain débit d'injection, l'eau atteint les sommets de quasiment toutes les épingles les plus hautes pour redescendre du côté de la branche froide en générant un débit d'eau relativement faible dans les épingles les plus hautes. Le débit d'eau d'injection peut être augmenté pour accroître les différents débits dans un faisceau de tubes, mais on veillera néanmoins à ne pas créer un débit d'injection trop important qui générerait dans les épingles les plus hautes des pertes de charge telles que l'eau pourrait ne plus atteindre les sommets. Pour une configuration de tube donnée, les pertes de charge sont en effet proportionnelles au carré du débit. Pour chaque différente configuration d'installation, on peut prévoir une plage de débit d'injection, ou même un débit d'injection optimal à respecter, qui pourra être déterminée par des essais expérimentaux ou une modélisation mathématique. En fonction de la plage de débit d'injection à respecter, on pourra déterminer le nombre de circuits d'injection à utiliser.

Dans un mode de réalisation non représenté, on peut prévoir un dispositif de raccordement et d'isolement fluidique 30 dans lequel au moins un des N éléments télescopiques de raccordement 321 est adapté pour boucher l'ouverture latérale de la cuve à laquelle il se raccorde. Ceci implique de prévoir une injection d'eau dans la boucle de refroidissement correspondante afin de pouvoir remplir la boucle. Par exemple, dans un réacteur de type EPR^{™} comportant quatre boucles de refroidissement avec un circuit d'injection séparé pour chaque branche chaude d'une boucle, il est envisageable de prévoir un dispositif de raccordement et d'isolement fluidique 30 comprenant quatre éléments télescopiques de bouchage ayant chacun un rôle de bouchon de façon à obturer l'ouverture latérale correspondante de la cuve. Le remplissage en eau pourra alors s'effectuer en actionnant ensemble les systèmes de pompage des quatre circuits d'injection et en ajustant les débits des pompes de façon à ce que les quatre boucles de refroidissement se remplissent à peu près à la même vitesse. En alternative, on pourra aussi raccorder un seul système de pompage à plus fort débit aux quatre entrées d'injection des branches chaudes.

Il est aussi envisageable de prévoir un dispositif de raccordement et d'isolement fluidique 30 comprenant au moins un élément télescopique de bouchage, et au moins deux éléments télescopiques non bouchés pour permettre de faire communiquer entre elles les branches chaudes correspondantes. Ceci peut être avantageux dans une configuration où on utiliserait au moins deux entrées d'injection des branches chaudes alimentées par des systèmes de pompage différents, de façon à ce qu'un système de pompage ayant le plus grand débit alimente au moins deux branches chaudes par une seule entrée d'injection et qu'un système de pompage ayant le moins grand débit alimente une seule branche chaude.

Comme mentionné au début de la présente description, le dispositif de raccordement et d'isolement fluidique n'est pas nécessairement prévu pour isoler complètement de l'intérieur de la cuve l'ensemble des branches de même nature. Par exemple, en variante du mode de réalisation ci-dessus, on peut utiliser des éléments télescopiques de bouchage substantiel munis chacun d'au moins passage de purge d'air tel qu'un orifice par lequel une petite proportion de l'eau injectée dans la branche correspondante lors de l'étape d'injection d'eau peut être évacuée directement dans la cuve sans cheminer par le générateur de vapeur. En fonction notamment de la configuration des tubes des branches chaudes au niveau de leurs raccordements avec la cuve, de tels orifices de purge d'air peuvent en effet s'avérer utiles afin d'éviter que de l'air soit piégé dans une branche chaude à proximité plus ou moins immédiate de l'élément télescopique bouchant la branche. La situation pourrait en effet devenir critique dans le cas où de l'air piégé ne migrerait pas jusqu'à la cuve après le retrait du dispositif de raccordement et d'isolement fluidique.

Un passage de purge d'air pourra par exemple être réalisé en prévoyant un joint gonflable 322 partiellement annulaire sur un élément télescopique bouchon, de façon à laisser un petit passage d'air entre la surface extérieure de l'élément télescopique et la paroi intérieure du tube de branche chaude en vis à vis. Le ou les passages de purge d'air d'un élément télescopique bouchon pourront être dimensionnés de façon à ce que le débit de l'eau évacuée directement dans la cuve ne dépasse pas une relativement petite proportion du débit d'eau injectée dans la branche lors de l'étape d'injection d'eau, par exemple quelques pourcents. Ceci permet d'une part de maintenir un débit d'eau suffisant dans la branche en direction du générateur de vapeur, et d'autre part de ne pas faire monter trop rapidement le niveau d'eau dans la cuve afin d'éviter de recouvrir les ouvertures associées aux branches froides tant que le remplissage des branches froides n'est pas terminé.

Par ailleurs, dans les modes de réalisation où le dispositif de raccordement et d'isolement fluidique est prévu pour faire communiquer entre elles les branches chaudes, on peut prévoir au moins un orifice de purge d'air sur le dispositif, par exemple sur le boitier central 32, de façon à éviter tout risque qu'un volume d'air turbulent dans le dispositif migre tardivement vers une branche chaude et reste piégé au niveau d'un générateur de vapeur à la fin de l'étape d'injection d'eau.

Dans un autre mode de réalisation non représenté, on peut prévoir une injection d'eau principale ou auxiliaire amenant l'eau directement à l'intérieur du dispositif de raccordement et d'isolement fluidique 30, par exemple par une tuyauterie rigide ou souple raccordée de façon étanche au boitier central 32 du dispositif 30, puisque l'eau injectée par cette voie va remplir les branches chaudes en passant par les éléments télescopiques de raccordement 321 dès lors que ceux-ci sont conçus pour permettre un passage de fluide.

Dans les modes de réalisation décrits ci-dessus, après le remplissage des générateurs de vapeur à partir des branches chaudes 3, l'eau s'écoule dans la cuve depuis chaque boucle de refroidissement et fait monter le niveau d'eau jusqu'à remplir complètement les branches froides 4 lorsque les ouvertures latérales 22 deviennent complètement immergées. Les branches chaudes 3 qui sont ici à la même hauteur sont donc aussi sous le niveau de l'eau de la cuve, et l'étape d'injection d'eau peut alors être arrêtée. Bien entendu, dans une configuration où les branches chaudes seraient plus élevées que les branches froides, il faudrait attendre d'immerger les ouvertures latérales 21 associées aux branches chaudes pour arrêter l'injection d'eau sans risque d'entrée d'air dans les boucles de refroidissement. De manière générale, on arrêtera l'injection d'eau quand un second niveau d'eau est atteint dans la cuve pour lequel les première et seconde ouvertures latérales associées à chaque boucle de refroidissement sont toutes complètement immergées. On pourra utiliser des capteurs de niveau d'eau existants dans la cuve pour déclencher l'arrêt de l'injection d'eau.

Le dispositif de raccordement fluidique 30 peut ensuite être remonté hors de l'eau et retiré de la cuve sans créer d'entrée d'air dans les boucles. On pourra tenir compte du volume d'eau déplacé par la sortie du dispositif 30, au cas où celui-ci impliquerait une baisse non négligeable du niveau dans la cuve, afin de prévoir un dit second niveau prédéterminé suffisamment haut. En pratique, il existe une grande plage de niveau d'eau entre le haut des ouvertures latérales 21 associées aux branches chaudes et le plan de joint de la cuve, par exemple de l'ordre d'un mètre. Le second niveau pourra donc être prévu plusieurs centimètres voire dizaines de centimètres au dessus des ouvertures latérales 21.

Le circuit primaire étant rempli en eau grâce au procédé décrit ci-dessus et étant étanche à l'air, l'eau présente dans le circuit primaire et en particulier dans les générateurs de vapeur à une altitude plus élevée que le niveau de la cuve ne peut pas migrer vers la cuve quand le dispositif 30 est retiré. Les opérations de maintenance du réacteur nucléaire peuvent ensuite être poursuivies jusqu'au redémarrage du réacteur, sans risquer une entrée d'air dans le circuit primaire dès lors que l'eau dans la cuve est maintenue au dessus du niveau des ouvertures latérales de la cuve associées aux boucles de refroidissement.

## Revendications

1. Procédé de remplissage en eau et de vidange d'air d'un circuit primaire (1) d'un réacteur nucléaire refroidi par de l'eau, suite à un arrêt du réacteur, ledit circuit primaire (1) comprenant une cuve (2) adaptée pour être remplie d'eau et recevoir du combustible nucléaire, et comprenant en outre au moins une boucle de refroidissement (11, 12, 13, 14) adaptée pour aspirer de l'eau de la cuve, céder de la chaleur à un générateur de vapeur (6) et ramener l'eau refroidie jusqu'à la cuve, chaque générateur de vapeur (6) étant relié d'une part à une première ouverture latérale (21) de la cuve (2) par un premier circuit fluidique (3) de départ d'eau et d'autre part à une seconde ouverture latérale (22) de la cuve par un second circuit fluidique (4) de retour d'eau, une paire de dites première et seconde ouvertures latérales (21, 22) étant associée à chaque boucle de refroidissement,
le procédé étant **caractérisé en ce qu'**il comprend les étapes de :
a) ajustement du niveau de l'eau (20) dans la cuve à un premier niveau pour lequel chaque boucle de refroidissement (11, 12, 13, 14) est mise à l'air par au moins l'une desdites première et seconde ouvertures latérales associées (21, 22);
b) mise en place dans la cuve d'un dispositif de raccordement et d'isolement fluidique (30) adapté pour être raccordé à l'un (3) desdits premier et second circuits fluidiques de chaque boucle de refroidissement afin d'isoler substantiellement ledit circuit fluidique (3) par rapport à l'intérieur de la cuve ;
c) injection d'eau dans au moins une boucle de refroidissement (11) dans celui (3) des premier et second circuits fluidiques de ladite boucle de refroidissement auquel est raccordé le dispositif de raccordement et d'isolement fluidique (30), avec un débit d'eau prévu de façon à remplir en eau ladite boucle de refroidissement en chassant l'air du générateur de vapeur (6) ;
d) arrêt de ladite injection d'eau quand l'eau s'écoulant dans la cuve depuis chaque boucle de refroidissement a fait monter le niveau de l'eau (20) à un second niveau pour lequel toutes lesdites première et seconde ouvertures latérales (21, 22) de la cuve soient complètement immergées ; et
e) retrait du dispositif de raccordement et d'isolement fluidique (30) .

2. Procédé selon la revendication 1 mis en oeuvre dans un réacteur nucléaire dont le circuit primaire (1) comprend une pluralité de N boucles de refroidissement (11, 12, 13, 14) reliées à la cuve (2), **caractérisé en ce que** le dispositif de raccordement et d'isolement fluidique (30) mis en place à l'étape b) est adapté pour se raccorder à un groupe de N ouvertures latérales de la cuve parmi un premier groupe de N dites premières ouvertures latérales (21) et un second groupe de N dites secondes ouvertures latérales (22).

3. Procédé selon la revendication 2, **caractérisé en ce que** le dispositif de raccordement et d'isolement fluidique (30) est adapté pour permettre qu'à l'étape c) l'eau injectée dans ledit circuit fluidique (3) s'écoule vers au moins un autre circuit fluidique de même nature (3) en passant par l'intérieur dudit dispositif de raccordement et d'isolement fluidique.

4. Procédé selon l'une quelconque des revendications précédentes, **caractérisé en ce que** l'injection d'eau à l'étape c) est effectuée par un circuit d'injection de sécurité (50) raccordé audit circuit fluidique (3) et apte à injecter de l'eau en cas d'accident de perte d'eau dans le circuit primaire (1) quand le réacteur nucléaire est en fonctionnement.

5. Procédé selon l'une quelconque des revendications 2 à 4, **caractérisé en ce qu'**à l'étape b) le dispositif de raccordement et d'isolement fluidique (30) est raccordé à chaque dite première ouverture latérale (21) de la cuve (2).

6. Procédé selon la revendication 5, **caractérisé en ce qu'**à l'étape c) l'injection d'eau dans les N boucles de refroidissement s'effectue à partir d'un unique circuit d'injection (50).

7. Procédé selon la revendication 1 ou 2, **caractérisé en ce qu'**on utilise un dispositif de raccordement et d'isolement fluidique (30) adapté pour boucher substantiellement au moins une ouverture latérale (21) associée à un circuit fluidique (3) auquel le dispositif (30) se raccorde.

8. Procédé selon l'une quelconque des revendications précédentes appliqué à un circuit primaire (1) dans lequel un dit générateur de vapeur (6) comprend une pluralité de tubes (7) de transport d'eau qui comprennent chacun deux parties de tube verticales (7A, 7B) reliées entre elles en formant une épingle, **caractérisé en ce qu'**à l'étape c) l'injection d'eau s'effectue avec un débit supérieur ou égal à un débit prédéterminé suffisant pour que dans tous les tubes (7) de chaque générateur de vapeur (6) l'eau remonte dans une première (7A) des deux parties de tube verticales (7A, 7B) et redescend dans la seconde partie de tube verticale (7B) en chassant l'air du tube.

## Patentansprüche

1. Verfahren zur Füllung mit Wasser und Luftentleerung eines Primärkreises (1) eines wassergekühlten Kernreaktors nach einem Abschalten des Reaktors, wobei der Primärkreis (1) einen Behälter (2) enthält, der geeignet ist, um mit Wasser gefüllt zu werden und Kernbrennstoff aufzunehmen und außerdem mindestens einen Kühlkreislauf (11, 12, 13, 14) enthält, der geeignet ist, um Wasser aus dem Behälter anzusaugen, Wärme an einen Dampferzeuger (6) abzugeben und das abgekühlte Wasser bis zum Behälter zurückzuführen, wobei jeder Dampferzeuger (6) einerseits mit einer ersten seitlichen Öffnung (21) des Behälters (2) über einen ersten Wasseraustritt-Flüssigkeitskreis (3) und andererseits mit einer zweiten seitlichen Öffnung (22) des Behälters über einen zweiten Wasserrücklauf-Flüssigkeitskreis (4) verbunden ist, wobei ein Paar der ersten und zweiten seitlichen Öffnungen (21, 22) jedem Kühlkreislauf zugeordnet ist,
wobei das Verfahren **dadurch gekennzeichnet ist, dass** es die folgenden Schritte enthält:
a) Anpassung des Wasserstands (20) im Behälter an einen ersten Pegel, bei dem jeder Kühlkreislauf (11, 12, 13, 14) durch mindestens eine der ersten und zweiten zugeordneten seitlichen Öffnungen (21, 22) entlüftet wird;
b) Einsetzen in den Behälter einer Anschlussund Flüssigkeitsisoliervorrichtung (30), die geeignet ist, um an einen (3) der ersten und zweiten Flüssigkeitskreise jedes Kühlkreislaufs angeschlossen zu werden, um den Flüssigkeitskreis (3) bezüglich des Inneren des Behälters im Wesentlichen zu isolieren;
c) Einspritzen von Wasser in mindestens einem Kühlkreislauf (11) in denjenigen (3) der ersten und zweiten Flüssigkeitskreise des Kühlkreislaufs, an den die Anschluss- und Flüssigkeitsisoliervorrichtung (30) angeschlossen ist, mit einem Wasserdurchsatz, der so vorgesehen ist, dass er den Kühlkreislauf mit Wasser füllt, indem er die Luft aus dem Dampferzeuger (6) verdrängt;
d) Beenden der Wassereinspritzung, wenn das von jedem Kühlkreislauf in den Behälter fließende Wasser den Wasserstand (20) auf einen zweiten Pegel hat steigen lassen, bei dem alle ersten und zweiten seitlichen Öffnungen (21, 22) des Behälters vollständig eingetaucht sind; und
e) Entfernen der Anschluss- und Flüssigkeitsisoliervorrichtung (30).

2. Verfahren nach Anspruch 1, das in einem Kernreaktor angewendet wird, dessen Primärkreis (1) eine Vielzahl von N Kühlkreisläufen (11, 12, 13, 14) enthält, die mit dem Behälter (2) verbunden sind, **dadurch gekennzeichnet, dass** die im Schritt b) eingesetzte Anschluss- und Flüssigkeitsisoliervorrichtung (30) geeignet ist, um an eine Gruppe von N seitlichen Öffnungen des Behälters aus einer ersten Gruppe von N ersten seitlichen Öffnungen (21) und einer zweiten Gruppe von N zweiten seitlichen Öffnungen (22) angeschlossen zu werden.

3. Verfahren nach Anspruch 2, **dadurch gekennzeichnet, dass** die Anschluss- und Flüssigkeitsisoliervorrichtung (30) geeignet ist, um es zu ermöglichen, dass im Schritt c) das in den Flüssigkeitskreis (3) eingespritzte Wasser zu mindestens einem anderen Flüssigkeitskreis gleicher Art (3) fließt, indem es über das Innere der Anschluss- und Flüssigkeitsisoliervorrichtung geht.

4. Verfahren nach einem der vorhergehenden Ansprüche, **dadurch gekennzeichnet, dass** die Wassereinspritzung im Schritt c) von einem Sicherheitseinspritzkreis (50) durchgeführt wird, der an den Flüssigkeitskreis (3) angeschlossen und geeignet ist, um im Fall eines Wasserverlust-Zwischenfalls im Primärkreis (1), wenn der Kernreaktor in Betrieb ist, Wasser einzuspritzen.

5. Verfahren nach einem der Ansprüche 2 bis 4, **dadurch gekennzeichnet, dass** im Schritt b) die Anschluss- und Flüssigkeitsisoliervorrichtung (30) an jede erste seitliche Öffnung (21) des Behälters (2) angeschlossen ist.

6. Verfahren nach Anspruch 5, **dadurch gekennzeichnet, dass** im Schritt c) die Wassereinspritzung in die N Kühlkreisläufe ausgehend von einem einzigen Einspritzkreis (50) erfolgt.

7. Verfahren nach Anspruch 1 oder 2, **dadurch gekennzeichnet, dass** eine Anschluss- und Flüssigkeitsisoliervorrichtung (30) verwendet wird, die geeignet ist, um im Wesentlichen mindestens eine seitliche Öffnung (21), die einem Flüssigkeitskreis (3) zugeordnet ist, an den die Vorrichtung (30) angeschlossen wird, zu verschließen.

8. Verfahren nach einem der vorhergehenden Ansprüche, angewendet an einen Primärkreis (1), bei dem ein Dampferzeuger (6) eine Vielzahl von Wassertransportrohren (7) enthält, die je zwei senkrechte Rohrabschnitte (7A, 7B) enthalten, die unter Bildung einer Haarnadel miteinander verbunden sind, **dadurch gekennzeichnet, dass** im Schritt c) die Wassereinspritzung mit einem Durchsatz größer als oder gleich einem vorbestimmten Durchsatz erfolgt, der ausreicht, damit in allen Rohren (7) jedes Dampferzeugers (6) das Wasser in einem ersten (7A) der zwei senkrechten Rohrabschnitte (7A, 7B) hochsteigt und im zweiten senkrechten Rohrabschnitt (7B) wieder sinkt, indem es die Luft aus dem Rohr verdrängt.

## Claims

1. Method for filling with water and emptying air from a primary circuit (1) of a water-cooled nuclear reactor, following a shutdown of the reactor, said primary circuit (1) comprising a vessel (2) adapted for being filled with water and for receiving nuclear fuel, and additionally comprising at least one cooling loop (11, 12, 13, 14) adapted for drawing water from the vessel, transferring heat to a steam generator (6), and returning the cooled water to the vessel, each steam generator (6) being connected on one side to a first side opening (21) in the vessel (2) by a first fluid circuit (3) for outflowing water and on the other side to a second side opening (22) in the vessel by a second fluid circuit (4) for inflowing water, a pair of said first and second side openings (21, 22) being associated with each cooling loop,
said method being **characterized in that** it comprises the steps of:
a) adjusting the water level (20) in the vessel to a first level, at which each cooling loop (11, 12, 13, 14) is vented by at least one of said first and second associated side openings (21, 22);
b) placing in the vessel a connection and fluid isolation device (30) adapted for connecting to one (3) of said first and second fluid circuits of each cooling loop in order to substantially isolate said fluid circuit (3) relative to the interior of the vessel;
c) injecting water into at least one cooling loop (11) in the one (3) of the first and second fluid circuits of said cooling loop to which the connection and fluid isolation device (30) is connected, at a flow rate intended to fill said cooling loop with water while expelling the air from the steam generator (6);
d) stopping said water injection when the water flowing into the vessel from each cooling loop has raised the water level (20) to a second level at which all of said first and second side openings (21, 22) of the vessel are completely immersed; and
e) removing the connection and fluid isolation device (30).

2. Method according to claim 1, applied in a nuclear reactor in which the primary circuit (1) comprises a plurality of N cooling loops (11, 12, 13, 14) connected to the vessel (2), **characterized in that** the connection and fluid isolation device (30) put in place in step b) is adapted for connecting to a group of N side openings of the vessel among a first group of N said first side openings (21) and a second group of N said second side openings (22).

3. Method according to claim 2, **characterized in that** the connection and fluid isolation device (30) is adapted so that in step c) the water injected into said fluid circuit (3) flows towards at least one other fluid circuit of the same type (3), passing through the inside of said connection and fluid isolation device.

4. Method according to any of the preceding claims, **characterized in that** the injection of water in step c) is performed by a safety injection circuit (50) connected to said fluid circuit (3) and able to inject water in case of water loss in the primary circuit (1) during operation of the nuclear reactor.

5. Method according to any of claims 2 to 4, **characterized in that** in step b) the connection and fluid isolation device (30) is connected to each said first side opening (21) of the vessel (2).

6. Method according to claim 5, **characterized in that** in step c) the injection of water into the N cooling loops occurs from a single injection circuit (50).

7. Method according to claim 1 or 2, **characterized in that** a connection and fluid isolation device (30) is used that is adapted for substantially sealing at least one side opening (21) associated with a fluid circuit (3) to which the device (30) is connected.

8. Method according to any of the preceding claims, applied to a primary circuit (1) in which a said steam generator (6) comprises a plurality of tubes (7) for transporting water which each comprise two vertical tube portions (7A, 7B) connected to each other in a hairpin shape, **characterized in that** in step c) the injection of water is performed at a flow rate greater than or equal to a predetermined flow rate sufficient to ensure that in all tubes (7) of each steam generator (6) the water rises in a first (7A) of the two vertical tube portions (7A, 7B) and descends in the second vertical tube portion (7B) while expelling the air from the tube.
